# EUROPÄISCHE PATENTANMELDUNG

(11) **EP 1 078 781 A2**
(43) Veröffentlichungstag der Anmeldung: **28.02.2001**
(21) Anmeldenummer: 00116902.8
(22) Anmeldetag: 04.08.2000
(51) Int. Cl.: B60C 27/08

(54) **Koppelhaken für Kettenglieder und Kettenstrangabschnitt mit einem derartigen Koppelhaken**

(30) Priorität: 04.08.1999 DE 19936811
(71) Anmelder: OBERLAND-Schneeketten Anton Mangold, 82467 Garmisch-Partenkirchen (DE)
(72) Erfinder: Mangold, Christian, 82467 Garmisch-Partenkirchen (DE)
(74) Vertreter: Lang, Friedrich, Dipl.-Ing.

(57) **Zusammenfassung**

Die Erfindung betrifft einen Koppelhaken (10) für auf Zug beanspruchte Kettenglieder (24,26) sowie einen Kettenstrangabschnitt mit einem derartigen Koppelhaken. Solche Koppelhaken und Kettenstrangabschnitte werden beispielsweise bei Reifenketten eingesetzt. Aufgabe der Erfindung ist es, einen Koppelhaken (10) und einen Kettenstrangabschnitt (25) anzugeben, welche ein einfaches Koppeln ermöglichen und gleichzeitig die wirksame Oberfläche einer zugehörigen Reifenkette nicht beeinträchtigen. Diese Aufgabe wird gelöst durch einen Koppelhaken für auf Zug beanspruchte Kettenglieder mit einem endseitigen Kopf (14) und einem Hakenteil (17), der im Anschluss an den Kopf (14) einen Sitzbereich (16) zur Aufnahme der Kettenglieder im gekoppelten Zustand sowie am freien Ende eine Formschluss-Verliersicherung aufweist. Die Verliersicherung wird dadurch gebildet, dass der zugehörige Teil des Hakens eine als Zwangsführung dienende Biegung aufweist, die in der Weise im dreidimensionalen Raum verläuft, dass die Kettenglieder beim Verschieben zwischen dem freien Ende (12) des Hakenteils (17) und dem Sitzbereich zwangsweise eine Bahn durchlaufen müssen, die aus der Ebene der Zugrichtung herausgeführt ist.

## Beschreibung

Die Erfindung betrifft einen Koppelhaken für auf Zug beanspruchte Kettenglieder. Die Erfindung betrifft ferner einen Kettenstrangabschnitt mit einem derartigen Koppelhaken.

Derartige Koppelhaken und Kettenstrangabschnitte werden beispielsweise bei Reifenketten eingesetzt. Sie dienen dazu, eine Reifenkette nach dem Aufziehen auf einen Reifen zu spannen und zu befestigen. Es kommt dabei auf eine einfache Handhabung an. Andererseits muß ein selbständiges Lösen ausgeschlossen sein.

Aus EP 0 911 191 A2 ist bekannt, zwei Kettenstrangabschnitte einer Reifenkette lösbar dadurch miteinander zu verbinden (koppeln), daß an einem Kettenstrangabschnitt ein im wesentlichen dreieckiges Endglied vorhanden ist, welches mit einem Verankerungsstück am anderen Kettenstrangabschnitt zusammen wirkt. Es hat in der Draufsicht im wesentlichen die Form eines Trapezes. Endglied und Verankerungsstück sind in ihren Abmessungen und in ihrer Form so aufeinander abgestimmt, daß sie nur mittels einer bestimmten Bewegungsfolge gekoppelt und entkoppelt werden können.

Als Nachteil kann es angesehen werden, daß die Enden beider Kettenstrangabschnitte mit speziellen Elementen ausgestattet werden müssen. Dies führt einerseits zu einem erhöhten Fertigungsaufwand. Andererseits ist deshalb konstruktionsbedingt ein relativ großer Bereich der Reifenkette nicht mit wirksamen Kettengliedern besetzt. Bei einer derartigen Ausführung würde im Bereich der Koppelelemente der Abstand zwischen wirksamen Kettengliedern, die beispielsweise mit Greifstegen besetzt sind, verdoppelt.

Der Erfindung liegt die **Aufgabe** zugrunde, einen Koppelhaken und einen Kettenstrangabschnitt der eingangs genannten Art anzugeben, welche ein einfaches Koppeln ermöglichen und gleichzeitig die wirksame Oberfläche einer zugehörigen Reifenkette nicht beeinträchtigen.

Diese Aufgabe wird für einen Koppelhaken gelöst mit einem endseitigen Kopf und einem Hakenteil, der im Anschluß an den Kopf einen Sitzbereich zur Aufnahme der Kettenglieder im gekoppelten Zustand sowie am freien Ende eine Formschluß-Verliersicherung aufweist, die dadurch gebildet wird, daß der zugehörige Teil des Hakens eine als Zwangsführung dienende Biegung aufweist, die in der Weise im dreidimensionalen Raum verläuft, daß die Kettenglieder beim Verschieben zwischen dem freien Ende des Hakenteils und dem Sitzbereich zwangsweise eine Bahn durchlaufen müssen, die aus der Ebene der Zugrichtung herausgeführt ist.

Für einen Kettenstrangabschnitt mit einem Kettenglied wird die Aufgabe dadurch gelöst, daß er dadurch am Koppelhaken befestigt ist, daß die lichte Weite des Kettengliedes verringert wurde, nachdem es in seine Sitzposition auf dem Koppelhaken gebracht wurde.

Bevorzugte Weiterbildungen sind in den abhängigen Ansprüche beschrieben.

Die Grundidee der Erfindung besteht demnach darin, einen Koppelhaken vorzusehen, der allein aufgrund seiner Form bzw. seines Verlaufs ein unbeabsichtigtes Lösen des eingehängten Kettengliedes verhindert. Die Formgebung des Koppelhakens bildet sozusagen ein Labyrinth oder eine Schikane, welche ein Koppeln oder Entkoppeln nur bei einer Bewegung des betreffenden Kettengliedes gestatten, welche im normalen Einsatz nicht vorkommt. Es muß also immer ein "unnatürlicher" Bewegungsablauf durchgeführt werden, was sicherstellt, daß sich die Verbindung unter normalen Betriebsbedingungen nicht selbsttätig lösen kann.

Die Erfindung hat dabei den Vorteil, daß der Koppelhaken an einem der Ketten- strangabschnitte ohne zusätzliches Element unmittelbar an einem Kettenglied angebracht werden kann. Als Gegenstück kann gleichfalls ein übliches Kettenglied verwendet werden.

Aufgrund der Form des erfindungsgemäßen Koppelhakens liegen die gekoppelten Kettenglieder über einen Großteil ihrer Länge überschneidend nebeneinander, so daß an der Koppelstelle nur ein geringer Versatz der Kettenglieder und der zugehörigen Kettenstrangabschnitte vorliegt. Der Versatz kann beispielsweise weniger als eine halbe Teilungslänge sein. Auf diese Weise wird die wirksame Oberfläche, beispielsweise einer Reifenkette, kaum verringert, weil an den horizontalen Kettengliedern aufgesetzte Greifstege lückenlos vorhanden sein können.

Nachfolgend wird die Erfindung anhand von mehreren in der Zeichnung dargestellten Ausführungsformen beispielhaft weiter beschrieben. Es zeigen schematisch:
- Fig. 1a, 1b und 1c: eine erste Ausführung eines Koppelhakens in drei Ansichten in einer Normaldarstellung;
- Fig. 2a, 2b: in zwei aufeinanderfolgenden Phasen das Aufschieben eines ersten Kettengliedes auf einen Koppelhaken gemäß Fig. 1;
- Fig. 3a, 3b: eine Anfangsphase beim Aufschieben eines zweiten Kettengliedes in zwei um 90° versetzten Ansichten;
- Fig. 4a, 4b: den gekoppelten Zustand nach dem Aufschieben des ersten und zweiten Kettengliedes auf den Koppelhaken gemäß Fig. 2 bzw. 3 in zwei um 90° versetzten Ansichten;
- Fig. 5, 5b: das Aufschieben eines Kettengliedes in zwei Phasen auf einen Koppelhaken gemäß einer zweiten Ausführungsform;
- Fig. 6a, 6b: das Aufschieben eines ersten Kettengliedes in zwei Phasen auf einen Koppelhaken einer dritten Ausführungsform;
- Fig. 7a, 7b: eine vierte Ausführungsform eines Koppelhakens in zwei um 90° versetzten Ansichten;
- Fig. 8a, 8b: das Aufschieben eines ersten Kettengliedes in zwei Phasen auf einen Koppelhaken gemäß Fig. 7;
- Fig. 9a, 9b: das Aufschieben eines zweiten Kettengliedes in zwei Phasen auf den Koppelhaken gemäß Fig. 7 und 8; und
- Fig. 10a, 10b: den gekoppelten Endzustand des ersten und zweiten Kettengliedes auf den Koppelhaken gemäß Fig. 7 bis 9 in zwei um 90° versetzten Ansichten.

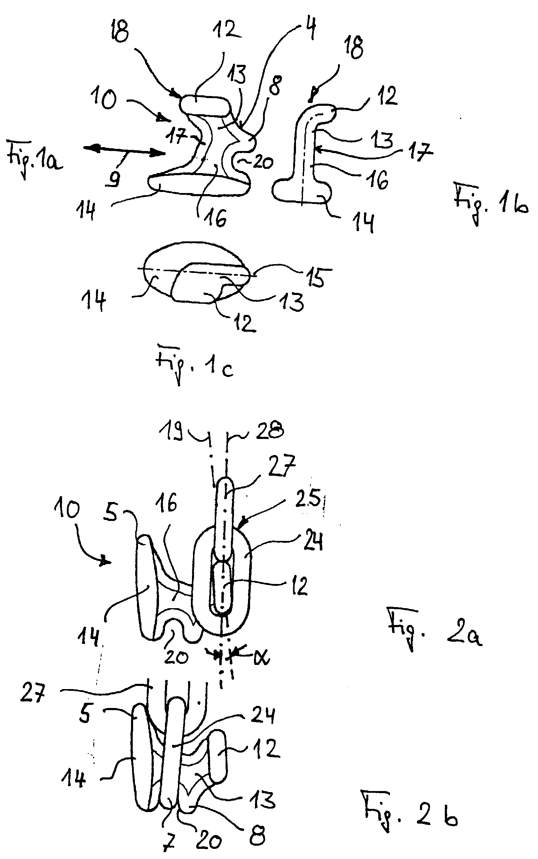

Bei allen im folgenden beschrieben Figuren sind die jeweils zugehörigen Ansichten in Normaldarstellung wiedergegeben. Dabei ist ein Koppelhaken 10 jeweils in einer Draufsicht wiedergegeben, bei welcher die Hauptebene eines Hakenteils 17 im wesentlichen in der Zeichenebene zu liegen kommt und das freie Ende 12 des Hakenteils 17 aus der Zeichenebene heraus weist. Eine Seitenansicht zeigt den Koppelhaken unter einer 90° im Uhrzeigersinn versetzten Ansicht. Eine weitere Draufsicht veranschaulicht den Koppelhaken 10 nach einer 90°-Drehung, bei welcher das freie Ende 12 aus der Zeichenebene herausgeschwenkt ist (Fig. 1c).

Gleiche Teile sind bei allen Figuren mit gleichen Bezugszeichen versehen.

Gemäß Fig. 1a, 1b und 1c weist der Koppelhaken 10 an einem Ende einen scheibenartigen, flachen Kopf 14 auf, welcher in dem dargestellten Beispiel gemäß Draufsicht in Fig. 1c eine zu einer Mittellinie 15 symmetrische, ovale Form aufweist.

Auf der Mittellinie 15 ist der Hakenteil 17 senkrecht aus der Kopfebene herausweisend vorhanden, der sich im dreidimensionalen Raum mit einer wendelartigen Biegung erstreckt.

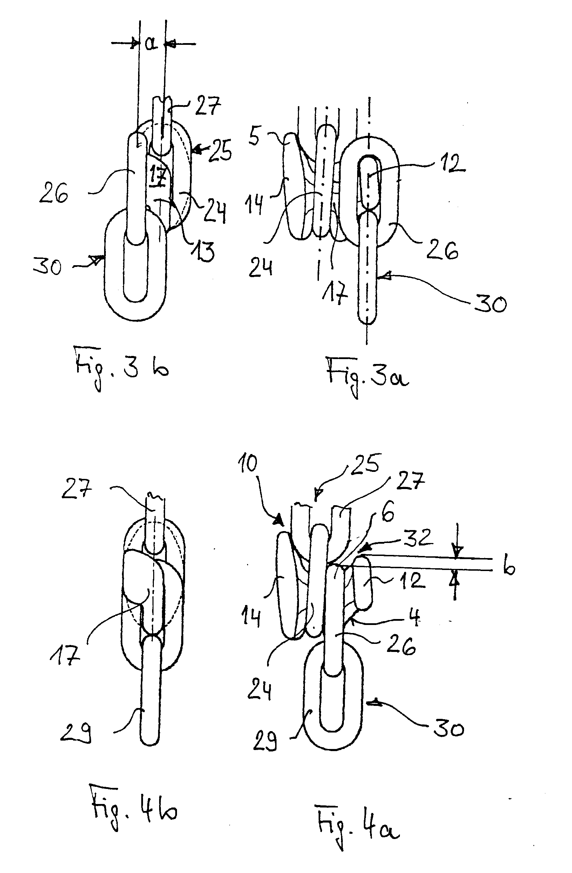

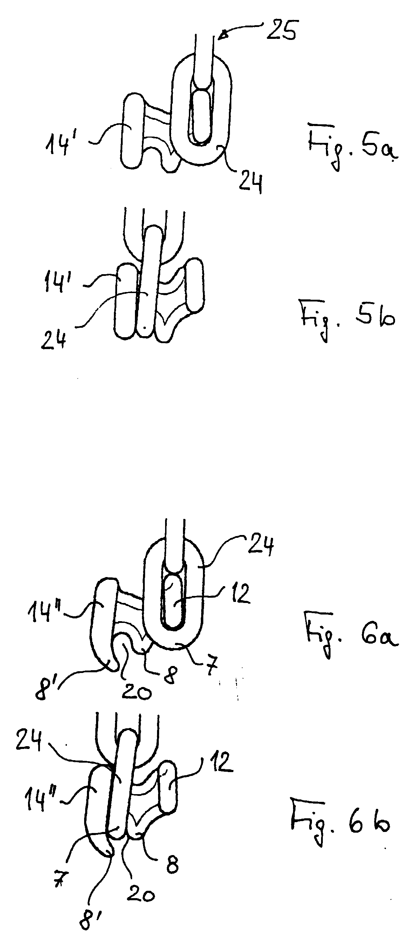

Der Hakenteil 17 weist im Anschluß an den Kopf 14 einen Sitzbereich 16 zur Aufnahme von Kettengliedern 24, 26 (Fig. 2, 3) auf. Am freien Ende weist der Hakenteil 17 ferner eine Formschluß-Verliersicherung 18 auf. Sie wird dadurch gebildet, daß der zugehörige Hakenteil im dreidimensionalen Raum eine Biegung aufweist, die als Zwangsführung 13 für die Kettenglieder 24, 26 dient (Fig. 2 bis Fig. 7), wenn sie auf dem Hakenteil 17 verschoben werden.

Unter Zwangsführung ist dabei zu verstehen, daß die betreffenden Kettenglieder zwangsweise eine bestimmte Bahn durchlaufen müssen, bis sie in den Sitzbereich 16 benachbart zum Kopf 14 gelangen. Die Zwangsführung definiert die Position und Ausrichtung des betreffenden Kettengliedes in jeder Phase während einer Bewegung zwischen dem freien Ende 12 und dem Sitzbereich 16. Diese Bahn bzw. die auszuführende Bewegung ist in der Weise vorgegeben, daß sie mit einer vorgegebenen Steigung aus der Ebene der Zug-richtung herausgeführt ist, wobei sie dem Kettenglied möglichst viele Drehungen und Verschwenkungen aufzwingt.

Der Bahnverlauf kann dabei stetig oder aus geraden Abschnitten zur gewünschten Biegung zusammengesetzt sein. Die Außenform der Bahn ist durch die lichte Weite der aufzusetzenden Kettenglieder in der Weise vorgegeben, daß eine möglichst genaue Führung und Ausrichtung gewährleistet ist. In Fig. 1a ist die Zugrichtung durch Doppelpfeil 9 veranschaulicht und sie verläuft hier parallel zur Zeichenebene.

Ein idealisiertes Beispiel für eine derartige Bahn stellt eine Schrauben- oder Wendellinie dar.

Zur Aufnahme eines ersten Kettengliedes weist der Sitzbereich 16 einerseits eine entgegen der Zugrichtung weisende erste Ausnehmung 20 auf, die einerseits vom Kopf 14 und andererseits von einer entgegen dessen Zugrichtung weisenden ersten Abweisnase 8 begrenzt wird. Für ein zweites Kettenglied gehört zum Sitzbereich 16 der Abschnitt des Hakenteils 17, in welchem die erste Abweisnase 8 angeordnet ist. Dieser Abschnitt hat somit die größte Ausdehnung, auch wenn er im Tiefpunkt des Hakenbogens liegt.

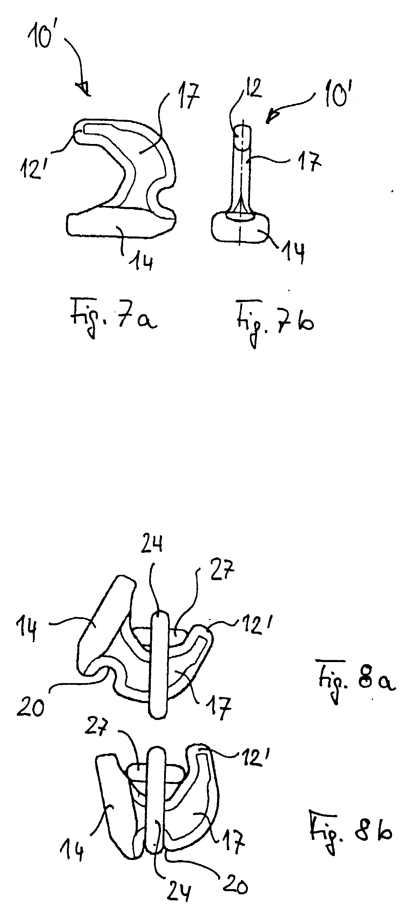

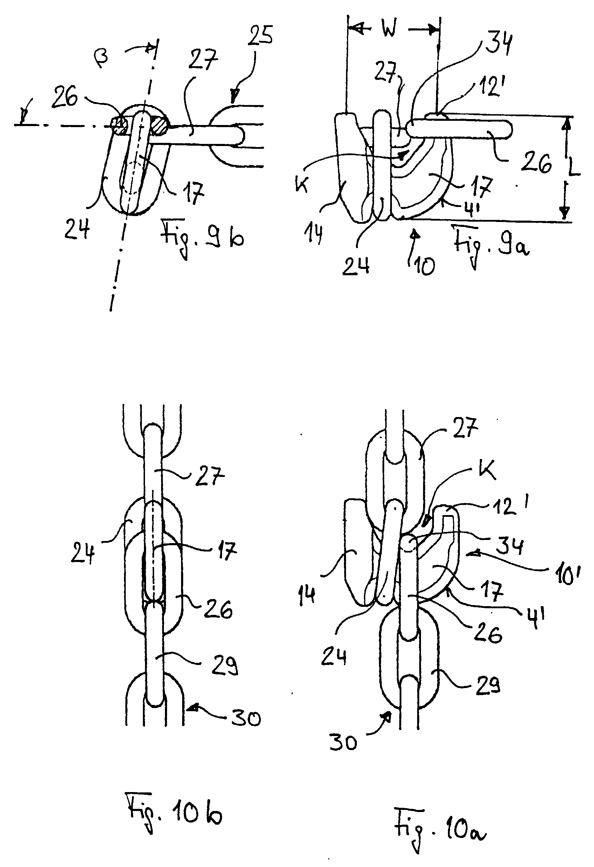

Zwischen der Abweisnase 8 und dem freien Ende 12 ist eine Führungskurve 4 vorhanden, die in entgegengesetzter Richtung wie der Hakenbogen konkav gewölbt ist. Sie dient als Anschlag und Führung für ein Kettenglied 29 (Fig. 4a, 4b).

Gemäß Fig. 2a, in welcher der Koppelhaken 10 gemäß Fig. 1 in Draufsicht dargestellt ist, sind die Form und die Abmessungen des freien Endes 12 so bemessen, daß es den inneren Freiraum eines ersten Kettengliedes 24 eines ersten Kettenstrangabschnitts 25 im wesentlichen ausfüllt, wobei berücksichtigt ist, daß ein weiteres Kettenglied 27 mit dem ersten Kettenglied 24 verbunden ist. Fig. 2a zeigt, daß das erste Kettenglied 24 aufgrund dieser Formgebung das freie Endes 12 nur dann überwinden kann, wenn bezüglich der Längsmittellinie 28 des Kettenglieds 24 (was der Zugrichtung entspricht) und der Längsmittellinie 19 des freien Endes 12 eine vorgegebene Winkelstellung (Winkel α) eingenommen wird.

Gemäß Fig. 2b befindet sich ein Bugteil 7 des ersten Kettenglieds 24 in der Ausnehmung 20, so daß der Bugteil 7 in seiner Lage auf dem Hakenteil 17 in seiner Sitzposition fixiert ist, wenn ein entgegengerichteter Zug auf das erste Kettenglied 24 ausgeübt wird. In dieser Sitzposition stützt sich eine Verlängerung 5 des Kopfes 14 am weiteren Kettenglied 27 in der Weise ab, daß der Winkelversatz zwischen Kopf 14, freiem Ende 12 einerseits und dem ersten Kettenglied 24 andererseits beibehalten wird.

Die Bewegung des ersten Kettengliedes 24 zwischen dem freien Ende 12 und der Sitzposition gemäß Fig. 2b erfolgt über die erste Abweisnase 8 hinweg, wobei auch dieser Bereich des Hakenteils 17 den inneren Freiraum des ersten Kettenglieds 24 soweit wie möglich ausfüllt. Das erste Kettenglied 24 kann also nur mit äußerst wenig Spielraum die erste Abweisnase 8 überwinden. Die erste Abweisnase 8 hat auf diese Weise die Funktion einer Verliersicherung und verhindert, daß sich der Koppelhaken 10 unbeabsichtigt vom ersten Kettenglied 24 lösen kann.

Bevorzugt wird diese Verliersicherung jedoch noch dadurch verbessert, daß die Form der Abweisnase 8 durch Krafteinwirkung so verändert wird, daß sie vom ersten Kettenglied 24 mangels Freiraum nicht mehr überwunden werden kann. Alternativ oder zusätzlich kann auch der innere Freiraum des ersten Kettenglieds 24 durch Krafteinwirkung verengt werden, was gleichfalls verhindert, daß es über die Abweisnase 8 aus der Sitzposition herausbewegt werden kann.

Gemäß Fig. 3a und 3b muß ein mit dem ersten Kettenglied 24 zu koppelndes zweites Kettenglied 26 eines zweiten Kettenstrangabschnitts 30 in der vorstehend beschriebenen Weise das freie Ende 12 überwinden, um auf den Hakenteil 17 oder von diesem herunter zu gelangen. Es gilt dabei, was vorstehend im Zusammenhang mit dem ersten Kettenglied 24 ausgeführt wurde.

Wie Fig. 3b ferner veranschaulicht, ist in dieser Stellung die Hauptebene des zweiten Kettenglieds 26 ferner aufgrund der Steigung der Biegung des Hakenteils 17 um einen Versatz a gegenüber der Hauptebene des weiteren Kettengliedes 27 des ersten Kettenstrangabschnitts 25 versetzt.

Wenn es daher seine Sitzposition gemäß Fig. 4a im Tiefpunkt des Hakenbogens eingenommen hat, bei welchem es im wesentlichen parallel zum ersten Kettenglied 24 und unmittelbar an diesem anliegend angeordnet ist, hat es bei der Bewegung entlang des Hakenteils 17 sowohl eine 90°-Verschwenkung ausgeführt, sowie den Versatz a (Fig. 3b) und einen Versatz b in Zugrichtung 9 überwunden. Beim Durchlaufen der Bahn verändert das zweite Kettenglied 26 kontinuierlich seine Position und Ausrichtung zwischen der in Fig. 3a und in Fig. 4a dargestellten Position.

In der dargestellten Sitzposition gemäß Fig. 4a, 4b befindet sich die erste Abweisnase 8 innerhalb der Öffnung des zweiten Kettenglieds 26, so daß dieser im wesentlichen ausgefüllt ist und eine Bewegung entgegen seiner Zugrichtung in dieser Sitzposition verhindert wird. Es läuft daher bei einer Zugentlastung auf.

Die Sicherung des zweiten Kettengliedes 26 in dieser Position wird noch dadurch unterstützt, daß die Führungskurve 4 ein bei Zugentlastung seitliches Ausweichen des Kettengliedes 29 erzwingt, welches innerhalb des zweiten Kettenstranges 30 mit dem zweiten Kettenglied 26 verbunden ist. Das bewirkt, daß sich das zweite Kettenglied 26 in seiner Sitzposition verklemmt.

Fig. 4a und 4b zeigen ferner, daß das weitere Kettenglied 27 des ersten Kettenstrangabschnitts 25 sich am freien Bug 6 des zweiten Kettenglied 26 abstützt. Der freie Bug 6 des zweiten Kettenstrangabschnitts 26 kann daher nur über einen kanalartigen Freiraum 32 zwischen dem weiteren Kettenglied 26 des ersten Kettenstrangabschnitts 25 und dem freien Ende 12 des Koppelhakens 10 seitwärts bewegt werden, wobei es wiederum durch die Zwangsführung des Hakenteils 17 an einer freien Bewegung gehindert ist.

Die Figuren 4a, 4b veranschaulichen im Zusammenhang mit der vorstehenden Beschreibung, daß die Zwangsführung des Hakenteils 17 eine Bahn vorgibt, die bei Zugbeanspruchung der beiden Kettenstrangabschnitte 25, 30 sowie bei einer Zugentlastung in keinem Fall auf "natürliche" Weise eingenommen wird. Die Bahn bildet also eine Schikane für das zweite Kettenglied 26, welche verhindert, daß sich das zweite Kettenglied 26 im Betriebszustand vom Koppelhaken 10 unbeabsichtigt lösen kann. Andererseits kann das zweite Kettenglied 26 von einem Bediener auf einfache Weise zum Koppeln und Entkoppeln entlang dieser Bahn geführt werden, so daß eine leichte Handhabbarkeit gewährleistet ist. Beim Koppeln ist es ausreichend, daß das zweite Kettenglied 26 zu Anfang über das freie Ende 12 geschoben und dann beide Kettenstrangsabschnitte unter Zug gesetzt werden. Dadurch rutscht das zweite Kettenglied auf einfache Weise in seine Sitzposition.

Bei dem in Fig. 5a und 5b dargestellten Ausführungsbeispiel weist der Kopf 14 keine Verlängerung 5 auf. Die Abstützung des Kopfes 14' erfolgt daher ausschließlich am ersten Kettenglied 24 des ersten Kettenstrangabschnittes 25. Der Kopf 14' ist dabei mit so großen Auflageflächen ausgestattet, daß er sicher an den Schenkeln des ersten Kettenglieds 24 anliegt.

Das Ausführungsbeispiel gemäß Fig. 6a und 6b unterscheidet sich vom Ausführungsbeispiel gemäß Fig. 5a und 5b durch eine zweite Abweisnase 8' am Kopf 14'', die gegenüberliegend zur ersten Abweisnase 8 den freien Bug 18 des ersten Kettengliedes 24 umgreift und den Sitz des ersten Kettenstrangabschnittes 24 zusätzlich sichert.

Beim Koppelhaken 10' des vierten Ausführungsbeispieles gemäß Fig. 7 bis Fig. 10 erfolgt die Zwangsführung des zweiten Kettengliedes 26 (Fig. 9 und 10) durch ein Zusammenwirken der Hakenform, der Hakenlänge L und der lichten Weite W des Hakenteils 17 einerseits und dem weiteren Kettenglied 27, welches mit dem ersten Kettenglied 24 des ersten Kettenstrangabschnittes 25 verbunden ist. Zwar verläuft der Hakenteil 17 im Unterschied zu den vorausgehend beschriebenen Beispielen im wesentlichen in der Hauptebene des Hakens (Zeichenebene in Fig. 7a). Wenn das erste Kettenglied 24 mit dem damit verbundenen weiteren Kettenglied 27 unverlierbar in seine Sitzposition gemäß Fig. 8b gebracht ist, wird zum Aufbringen des zweiten Kettenglieds 26 gemäß Fig. 9a und 9b das weitere Kettenglied 26 im wesentlichen senkrecht zur Zugrichtung (d.h. senkrecht zur Zeichenebene) abgeschwenkt. Auf diese Weise wird zwischen dem freien Ende 12', des Hakenteils 17, dem ersten Kettenglied 24 sowie dem weiteren Kettenglied 27 des ersten Ketten-strangabschnitts 25 ein Kanal K gebildet, welcher dem freien Bug 34 des zweiten Kettengliedes 26 gerade das Passieren gestattet, wenn das zweite Kettenglied 26 vom freien Ende 12 in seine Sitzposition gemäß Fig. 9a und 9b bzw. aus dieser herausbewegt wird.

In dieser Situation ist die Hauptebene des Koppelhakens 10 einschließlich des Hakenteils 17 um einen Winkel β bezüglich der Hauptebene des zweiten Kettengliedes 26 verschwenkt, um die Weite des Kanals K zu maximieren (Fig. Fig. 9b). Das Verschwenken des Koppelhakens unabhängig vom ersten Kettenglied 24 kann deshalb erfolgen, weil ausschließlich im Sitzbereich des ersten Kettengliedes 24 auf dem Hakenteil 17 ein Spiel vorgesehen ist.

Wird anschließend gemäß Fig. 10a und 10b das weitere Kettenglied 27 des ersten Kettenstrangabschnitts 25 in seine Zugposition bzw. Betriebslage gemäß Fig. 10a und 10b verschwenkt, so verengt und versperrt es den Kanal K und verhindert, daß sich das erste Kettenglied 24 vom Koppelhaken 10' lösen kann. In dieser Betriebsstellung stützt sich das weitere Kettenglied 27 formschlüssig am Kopf 14 gegenüberliegend dem freien Ende 12 ab, so daß es nicht parallel zu seiner Hauptebene seitlich weggedrückt werden kann.

Die konvexe Steuerkurve 4' am Außenbogen des Hakenteils 17 erzwingt, wie vorstehend beschrieben wurde, bei einer Zugentlastung ein seitliches Ausweichen des Kettenglieds 29 im zweiten Kettenstrangabschnitt 30. Dadurch wird das zweite Kettenglied 26 formschlüßig auf dem Hakenteil 17 verklemmt und in seiner Sitzposition gesichert.
Wie insbesondere aus den Figuren 8 bis 10 und zugehöriger Beschreibung ersichtlich wurde, wird der Kanal K nur dann freigegeben, wenn sowohl das weitere Kettenglied 27 des ersten Kettenstrangabschnitts 25 als auch das zweite Kettenglied 26 des zweiten Kettenstrangabschnittes 30 gleichzeitig eine Position einnehmen bzw. eine zwangsgeführte Bewegung ausführen, die unter Zugspannung oder allgemein im Betriebszustand nicht vorkommen. Sie können jedoch von einer Bedienperson auf einfache Weise eingestellt und durchgeführt werden, so daß auch bei diesem Ausführungsbeispiel eine leichte Handhabbarkeit gewährleistet ist.

## Patentansprüche

1. Koppelhaken für auf Zug beanspruchte Kettenglieder mit einem endseitigen Kopf und einem Hakenteil, der im Anschluß an den Kopf einen Sitzbereich zur Aufnahme der Kettenglieder im gekoppelten Zustand sowie am freien Ende eine Formschluß-Verliersicherung aufweist, die dadurch gebildet wird,
daß der zugehörige Teil des Hakens eine als Zwangsführung dienenden Biegung aufweist, die in der Weise im dreidimensionalen Raum verläuft, daß die Kettenglieder beim Verschieben zwischen dem freien Ende des Hakenteils und dem Sitzbereich zwangsweise eine Bahn durchlaufen müssen, die aus der Ebene der Zugrichtung herausgeführt ist.

2. Koppelhaken nach Anspruch 1,
**dadurch gekennzeichnet,**
daß die Biegung angenähert einer Schraubenlinie folgt.

3. Koppelhaken nach Anspruch 1,
**dadurch gekennzeichnet,**
daß die Biegung einen ersten Abschnitt entgegen der Zugrichtung und einen zweiten Abschnitt lotrecht zur Ebene der Zugrichtung aufweist.

4. Koppelhaken nach Anspruch 3,
**dadurch gekennzeichnet,**
daß die Biegung einen dritten Abschnitt aufweist, der unter einem Winkel zur Zugrichtung verläuft.

5. Koppelhaken nach einem der vorhergehenden Ansprüche,
**dadurch gekennzeichnet,**
daß der die Zwangsführung bildende Hakenteil bezüglich des inneren Freiraums eines betreffenden Kettengliedes eine formschlüssige Führung bildet.

6. Koppelhaken nach einem der vorhergehenden Ansprüche,
**dadurch gekennzeichnet,**
daß der Sitzbereich mindestens eine Abweisnase zur Sitzsicherung des Kettengliedes aufweist, welches benachbart zum Kopf angeordnet ist.

7. Koppelhaken nach Anspruch 6,
**dadurch gekennzeichnet,**
daß eine erste Abweisnase im Sitzbereich zwischen dem jeweiligen Sitz der Kettenglieder angeordnet und entgegengesetzt zur Hakenrichtung gerichtet ist, so daß es als Verliersicherung für das Kettenglied benachbart zum Kopf dient.

8. Koppelhaken nach Anspruch 6 oder 7,
**dadurch gekennzeichnet,**
daß eine zweite entgegen der Hakenrichtung gerichtete Abweisnase am Kopf zur Sicherung des benachbarten Kettengliedes vorhanden ist.

9. Koppelhaken nach einem der vorhergehenden Ansprüche,
**dadurch gekennzeichnet,**
daß der Kopf eine Stützverlängerung aufweist, die bis zu einem mit dem benachbarten Kettenglied verbundenen weiteren Kettenglied eines zugehörigen Kettenstranges reicht.

10. Koppelhaken nach einem der vorhergehenden Ansprüche,
**dadurch gekennzeichnet,**
daß die lichte Weite des Hakenteilendes so bemessen ist, daß in einer Hauptebene des Hakenteils die Hakenöffnung gesperrt wird, wenn ein weiteres Kettenglied, welches mit dem dem Kopf benachbarten Kettenglied innerhalb eines Kettenstranges verbunden ist, vorhanden und in Zugposition ausgerichtet ist.

11. Koppelhaken nach einem der vorhergehenden Ansprüche,
**dadurch gekennzeichnet,**
daß der Kopf etwa die Gliedbreite des zugehörigen Kettengliedes aufweist.

12. Kettenstrangabschnitt mit einem Koppelhaken nach Anspruch 1 am letzten Kettenglied,
**dadurch gekennzeichnet,**
daß es dadurch am Koppelhaken befestigt ist, daß seine lichte Weite verringert wurde, nachdem es in seine Sitzposition auf dem Koppelhaken gebracht wurde.
